# EUROPEAN PATENT APPLICATION

(11) **EP 4 653 755 A1**
(43) Date of publication of application: **26.11.2025**
(21) Application number: 25178292.6
(22) Date of filing: 22.05.2025
(51) Int. Cl.: F17C 13/12

(54) **COMPRESSED GAS STORAGE DEVICE, A RELATED FIRST ENCLOSURE, A RELATED COMPRESSED GAS STORAGE SYSTEM AND A RELATED METHOD**

(30) Priority: 22.05.2024 BE 202405295
(71) Applicant: CMB.TECH Enterprises, 2000 Antwerpen (BE)
(72) Inventor: White, George, 2000 Antwerpen (BE); Pegrum, Stephen, 2000 Antwerpen (BE); ter Heegde, Bram, 2000 Antwerpen (BE); Corrigan, Alexander James, 2000 Antwerpen (BE)
(74) Representative: Gevers Patents

(57) **Abstract**

The invention relates to compressed gas storage device comprising at least one cylinder (1) configured to store compressed gas and a structural support frame (3) configured to position the at least one cylinder, the compressed gas storage device (CGSD) comprising a high-pressure gas-line (8) configured to couple the at least one cylinder to a gas consumer device, exterior of the compressed gas storage device and each cylinder of the at least one cylinder comprising a valve (4) configured to couple the cylinder to the high pressure gas-line (8) wherein the Compressed gas storage device further comprises a first enclosure that is configured to enclose the valve configured to couple the cylinder to the high pressure gas-line and the high pressure gas-line gas-tight from the environment, the first enclosure further comprising a ventilation inlet (10) and ventilation outlet (11) for evacuating leaked compressed gas.

## Description

### Technical field

The present invention relates to a compressed gas storage device (CGSD) a related compressed gas storage system, a related first enclosure and related method.

### Background art

Currently, compressed gas storage devices comprising multiple cylinders configured to store high pressured gas, such as hydrogen or other gaseous fuels, already exist. Such devices usually also comprise a frame configured to position the cylinders. The compressed gas storage device further comprises a high-pressure gas-line configured to couple the cylinders to a gas consumer device exterior of the compressed gas storage device. Each cylinder of the cylinders comprise a valve that is configured to couple the cylinder to the high pressure gas-line.

Such compressed gas storage devices have the disadvantage that in case of leakage of compressed gas, a hazardous situation might occur due to the uncontrolled presence of the gas.

In order to overcome such hazardous situations, usually the cylinders, the high-pressured gas-line and the vents are positioned in open air such that, in case of a leak, the gas is immediately vented away from the location. Otherwise, if the compressed gas storage device is located indoors, venting devices, such as for example ventilators, are often provided such as to provide venting of any leaked gas from any enclosure in which the gas storage device is located. However, the installation of such venting devices is cumbersome, expensive and moreover operating such venting devices requires energy.

### Disclosure of the invention

An object of embodiments of the present invention is to provide with a compressed gas storage device (CGSD) of the above known type but wherein at least some of the aforementioned shortcoming or drawbacks of the known solutions are alleviated or overcome.

In particular, it is an object of embodiments of the present invention that in case of application of a compressed gas storage device of the above known type in closed environments such as a compressed gas like hydrogen fuel system below the uppermost watertight deck of a marine vessel or ship or alternatively, any enclosed environment like a building, the aforementioned shortcoming or drawbacks of the known solutions are alleviated or overcome.

According to embodiments of the invention, this object is achieved by the compressed gas storage device as described in claim 1, a first enclosure as described in claim 10 and a related system as described in claim 11 and a related method as disclosed in claim 14.

Indeed, this object is achieved by a compressed gas storage device that comprises a first enclosure that is configured to enclose the valve configured to couple the cylinder to the high pressure gas-line gas-tightly from an environment of the compressed gas storage device, the first enclosure further comprising a ventilation inlet and ventilation outlet for evacuating leaked compressed gas. Preferably, the first enclosure encloses the valve. Preferably, the valve couples the cylinder to the high pressure gas-line. More preferably, the valve couples the cylinder directly to the high pressure gas-line.

By ventilating the first enclosure, such as a Tank Connection Space TCS, possible leaked compressed gas is evacuated towards the external environment such as the open air alleviating the hazards of a release of gas in an enclosed space so that a hazardous situation is avoided and risk for explosions is reduced or overcome.

Furthermore, by reducing the size of this first enclosure the ventilation of such first enclosures is facilitated requiring less effort and or energy for optimum ventilating this space. Hence, the first enclosure preferably does not encompass the respective cylinder and preferably is limited as much as possible around the valve of the at least one cylinder.

The compressed gas may be hydrogen fuel or other gaseous fuels.

The at least one cylinder is configured to store compressed gas, preferably the at least one cylinder stores compressed gas, preferably substantially compressed gas, more preferably substantially solely compressed gas, more preferably solely compressed gas. Preferably, the compressed gas is stored in the at least one cylinder in substantially a single phase, more preferably the compressed gas is stored in the at least one cylinder in a single phase.

Preferably, the first enclosure is a Tank connection Space (TCS).

In case of a plurality of cylinders, at least some of the cylinders of this plurality are positioned such as to gather the vents of the respective cylinders as much as possible, for example by stacking the cylinders vertically, in order to limit the space of the first enclosure. As such, the volume where possible leaks might occur is limited so that, for example, less energy is required for evacuating leaked compressed gas towards the external environment, such as the open air, alleviating the hazards of a release of gas in an enclosed space so that hazardous situation is avoided and risk for explosions is reduced or overcome.

A further characteristic feature of embodiments of the present invention is disclosed in claim 2.

Preferably, in such embodiments, the second enclosure encloses the at least one cylinder, or, more preferably, the compressed gas storage device.

Due to the fact that the compressed gas storage device comprises a second enclosure that comprises a sloped ceiling, preferably provided above the at least one cylinder, that is configured to guide leaked hydrogen gas towards an external outlet of the second enclosure, risks for hazardous situations are reduced even more. Indeed, if, for example, the cylinder should inadvertently start leaking, the leaked gas would then be guided by the sloped ceiling towards the external outlet of the second enclosure. In this manner, leaked compressed gas is guided by means of the sloped ceiling in direction of external outlets by natural buoyancy forces without requiring additional ventilation means for forcing the leaked compressed gas towards the external outlet. Hence, less energy is required for obtaining a situation with a diminished risk for hazardous situations.

A further characteristic feature of embodiments of the present invention is disclosed in claim 3.

By providing a ventilation inlet and outlet which are lockable and additionally by filling the first enclosure with an inert gas, the risks for hazardous situations are reduced even more due to the fact that the inert gas within the first enclosure prevents air, and hence oxygen, to mix with hydrogen. In this way, a potential ignition of the gas is further prevented. Such inert gas can be for example nitrogen, argon and/or helium.

A further characteristic feature of embodiments of the present invention is disclosed in claim 4.

The compressed gas storage device according to embodiments of the present invention comprises a thermal safety device that is configured to discharge the compressed gas, such as for example Hydrogen fuel, from the at least one cylinder to the external environment of the CGSD, preferably outside off the second enclosure, more preferably the open air, preferably via a vent line, for example if a temperature near the thermal safety device exceeds a certain threshold value. The vent line preferably is connected to the valve such that the valve can be activated such as to evacuate the compressed gas to the external environment.

Upon detection of a temperature being too high, i.e. a temperature above a threshold value within the first enclosure, e.g. being a Tank connection Space (TCS), a thermal safety device is configured to discharge the compressed gas, e.g. compressed gas from the at least one cylinder to the external environment, e.g. Hydrogen fuel from the at least one cylinder to the external environment, thereby significantly reducing the risk of explosion of the first enclosure, e.g. being a tank connection space, by evacuating the stored compressed gas from the storage into external environment such as open air, alleviating the hazards of a release in an enclosed space such as a release below deck.

A further characteristic feature of embodiments of the present invention is disclosed in claim 5.

The compressed gas storage device (CGSD) according to embodiments of the present invention comprises an external thermal trigger device, located within the structural support system, that is configured to trigger discharge of the compressed gas, e.g. compressed gas from the at least one cylinder to the external environment, e.g. Hydrogen fuel from the at least one cylinder to the external environment, if a temperature near the external thermal trigger device exceeds a certain threshold value.

Upon detection of a temperature being too high near the external thermal safety device, i.e. a temperature above a threshold value near the external thermal trigger device, e.g. within the structural support system, a thermal safety device configured to discharge the compressed gas, e.g. Hydrogen fuel from the at least one cylinder to the external environment, thereby significantly reducing the risk of explosion of the first enclosure, e.g. being a tank connection space, by evading the stored compressed gas from the storage into external environment such as open air, alleviating the hazards of a release in an enclosed space.

As the first enclosure, e.g. being an TCS, preferably acts as a thermal barrier to the valve with a preferred integrated thermal safety device and therefore does not protect the cylinder from thermal over-pressurization, preferably an additional external thermal trigger device is preferably located within the structural support frame to detect whether a temperature near the external thermal trigger device exceeds a certain threshold value.

According to preferred embodiments of the compressed gas storage device according to the present invention, the compressed gas storage device comprises a vent line. The vent line is provided to vent the compressed gas, such as for example Hydrogen fuel, from the at least one cylinder to the external environment, for example if a temperature near the thermal safety device and/or the external thermal safety device, exceeds a certain threshold value. The vent line preferably is connected to the valve such that the valve can be activated such as to evacuate the compressed gas to the external environment, for example by a dedicated control system.

Another characteristic feature of embodiments of the present invention is disclosed in claim 6.

The valve of the compressed gas storage device (CGSD) according to embodiments of the present invention is configured to control a flow of gas in and out of the at least one cylinder. Preferably, the valve thereto comprises an electric solenoid configured to control the flow of gas in and out of the at least one cylinder via electrical excitation of the valve by means of a dedicated control system.

A further characteristic feature of embodiments of the present invention is disclosed in claim 7.

The compressed gas storage device (CGSD) according to embodiments of the present invention further comprises a gas detector configured to detect presence of gas in the first enclosure. Upon detection of gas within the first enclosure, such as a TCS, the valve of the first enclosure can be closed, for example by means of a control system using the event of detection of gas as a signal for closing the valve in the first enclosure, thereby significantly limiting the amount of escaped gas.

A further characteristic feature of embodiments of the present invention is disclosed in claim 8.

The compressed gas storage device (CGSD) according to embodiments of the present invention further comprises a control means configured to close the valve in the first enclosure at detection of gas in the first enclosure. Upon detection of gas within the first enclosure, such as a TCS, the valve of the first enclosure can be closed by means of a control system using the event of detection of gas as a signal for closing the valve in the first enclosure thereby significantly reducing the amount of escaped gas.

Still a further characteristic feature of embodiments of the present invention is disclosed in claim 9.

The second enclosure comprises a manifold comprising an outer tube coupled to a ventilation inlet or ventilation outlet, and the outer tube comprising an inner tube, the inner being coupled to the high pressure gas-line.

Such a manifold is advantageous in that the outer tube of the high pressure gas-line reduces the risk of leakages within the second enclosure.

Still a further characteristic feature of embodiments of the present invention is disclosed in claim 10.

A compressed gas storage system (CGSD) for providing the compressed gas stored to a compressed gas user device comprising, a plurality of the compressed gas storage devices according to any of claims 1 to 9.

Still a further characteristic feature of embodiments of the present invention is disclosed in claim 13.

The compressed gas consumer device is one of a combined hydrogen/diesel engine, a hydrogen engine, a fuel cell or any other gaseous fuel consuming device.

### Brief description of the drawings

The invention will be further elucidated by means of the following description and the appended figures.
Figure 1 shows a Compressed gas storage device CGSD according to first embodiment of the present invention; and
Figure 2 shows a system including a plurality of Compressed gas storage device CGSD according to an embodiment of the present invention; and
Figure 3 shows a Compressed gas storage device CGSD according to first embodiment of the present invention where the device is located within an enclosure comprising a sloped ceiling.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

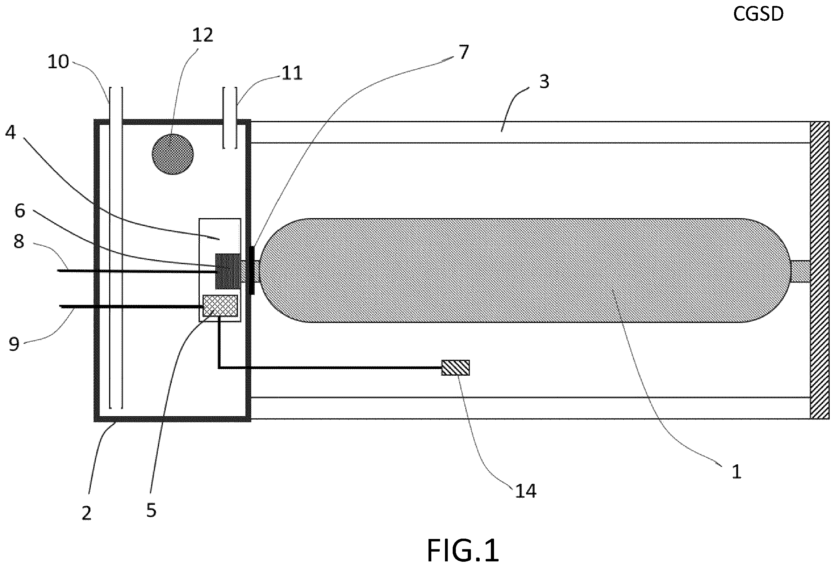

Figure 1 shows a compressed gas storage device CGSD that comprises at least one cylinder 1 configured to store compressed gas and a second enclosure 15 of the at least one cylinder with a structural support frame 3. The second enclosure 15 encompasses the at least one cylinder.

This structural support frame 3 is applied for positioning the one or more cylinders in a fixed way. Alternatively, to the embodiment as shown in Fig 1 where the compressed gas storage device CGSD comprises a single cylinder, according to further embodiments of a compressed gas storage device CGSD, the CGSD may comprise a plurality of cylinders for storing the compressed gas. A high-pressure gas-line 8 is configured to couple the at least one cylinder to a gas consumer device located externally of the first and the second enclosure 15.

Such compressed gas consumer device may be one of a combined hydrogen/diesel engine, a hydrogen engine, a fuel cell or other gaseous fuel consumer device in case the applied compressed gas is hydrogen or other gaseous fuels.

Each cylinder of the at least one cylinder comprises a valve 4 that is configured to couple the cylinder to the high pressure gas-line 8. The Compressed gas storage device further comprises a first enclosure 2 that is configured to enclose the valve 4 gas-tightly from the external environment. The first enclosure 2 further comprises a ventilation inlet 10 and ventilation outlet 11 for evacuating leaked compressed gas from the first enclosure. Figure 1 shows that the respective cylinders are preferably gas-tightly separated from the first enclosure by a sealing flange 7.

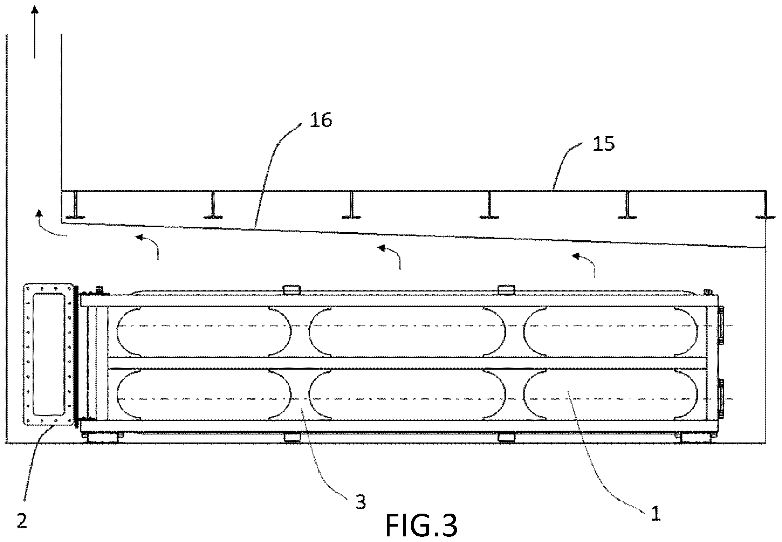

In case of a plurality of cylinders, as is shown in Fig. 3, the cylinders of this plurality are preferably stacked vertically in order to limit the volume of the first enclosure 2 and/or for example the surface of the ceiling of the first enclosure 15 so that less energy is required for evacuating leaked compressed gas is towards the external environment, such as the open air, alleviating the hazards of a release of gas in an enclosed space so that the hazardous situation is avoided and risk for explosions is reduced or overcome.

The compressed gas may be hydrogen but alternatively may be any other gaseous fuel.

By ventilating the first enclosure 2, such as a Tank Connection Space (TCS), possible leaked compressed gas is evacuated towards the external environment such as the open air alleviating the hazards of a release of gas in an enclosed space so that hazardous situation is avoided and risk for explosions is reduced or overcome.

Furthermore, by reducing the size of this first and/or second enclosure, for example by compactly stacking the cylinders of the at least one cylinder, the ventilation of such second enclosures is facilitated requiring less effort and/or energy for optimum ventilating this space.

The first enclosure 2 is for example subject to a force ventilation method wherein the air is refreshed sufficiently to dilute any hydrogen concentration to a safe level.

By providing the first enclosure 2 with a ventilation inlet 10 and ventilation outlet 11 which are lockable and additionally by filling the first enclosure 2 with an inert gas an inert gas the risks for hazardous situation are reduced even more due to the fact that the inert gas comprised by the first enclosure does not allow air to mix with hydrogen in this way preventing potential ignition of the gas.

### Such inert gas could be nitrogen, argon or helium

Furthermore, the compressed gas storage device CGSD according to embodiments of the present invention additionally may comprise a thermal safety device 5 that is configured to discharge the compressed gas, such as Hydrogen fuel or any other gaseous fuel, from the at least one cylinder to the external environment if a temperature near the thermal safety device exceeds a certain threshold value. The thermal safety device may for instance comprise a breakable temperature sensitive bulb. When the temperature of an area near the bulb exceeds a predefined threshold value, the bulb may rupture and gas under pressure is discharged from the cylinder.

Hence, upon detection of a temperature being too high, i.e. a temperature above a threshold value within the first enclosure, e.g. being a Tank connection Space (TCS), a thermal safety device is configured to discharge the compressed gas, e.g. Hydrogen fuel from the at least one cylinder to the external environment, thereby significantly reducing the risk of explosion of the first enclosure, e.g. being a tank connection space, by evading the stored compressed gas fuel storage from the storage into external environment such as open air, alleviating the hazards of a release in an enclosed space.

The compressed gas storage device according to embodiments of the present invention moreover may comprise an external thermal trigger device 14, located within the structural support frame 3, that is configured to trigger discharge of the compressed gas, e.g., Hydrogen fuel from the at least one cylinder to the external safe venting location, if a temperature near the external thermal trigger device 14 exceeds a certain threshold value.

Upon detection of a temperature being too high near the external thermal safety device, i.e. a temperature above a threshold value near the external thermal trigger device 14, e.g. within the structural support frame 3, a thermal safety device configured to discharge the compressed gas, e.g. Hydrogen fuel from the at least one cylinder to the external environment via a cylinder vent line 9, thereby significantly reducing the risk of explosion of the first enclosure, e.g. being a tank connection space, by evading the stored compressed gas from the storage into external environment such as open air, alleviating the hazards of a release in an enclosed space. The thermal safety device may for example comprise the valve 4.

As the first enclosure 2, e.g. being an TCS, acts as a thermal barrier to the valve 4 with an integrated thermal safety device 5 and therefore does not protect the cylinder from thermal over-pressurization the additional external thermal trigger device 14 may be located within the structural support frame 3 to detect whether a temperature near the external thermal trigger device 14 exceeds a certain threshold value and upon detection of an exceeded threshold triggers the thermal safety device to discharge the compressed gas.

The compressed gas storage device according to embodiments of the present invention may further comprise a valve 4, preferably comprising an electric solenoid 6, that is configured to control a flow of gas in and out of the at least one cylinder, preferably at electrical excitation of the valve 4 by means of a dedicated control system.

The compressed gas storage device according to embodiments of the present invention additionally may further comprise a gas detector 12 that is configured to detect presence of gas in the first enclosure 2. Upon detection of gas within the first enclosure such as a TCS, the valve 4 of the first enclosure 2 can be closed by means of a dedicated control system using the event of detection of gas as a signal for closing the electric solenoid 6 in the first enclosure thereby significantly limiting the amount of escaped gas.

The compressed gas storage device according to embodiments of the present invention further may comprise a control means such as a processor that is configured to control the closing of the electric solenoid 6 in the first enclosure at detection of gas in the first enclosure 2. Upon detection of gas within the first enclosure such as a TCS, the valve 4 of the first enclosure 2 can be closed by means of a control system, i.e., the processor, using the event of detection of gas as a signal for closing the electric solenoid 6 in the first enclosure thereby significantly reducing the amount of escaped gas.

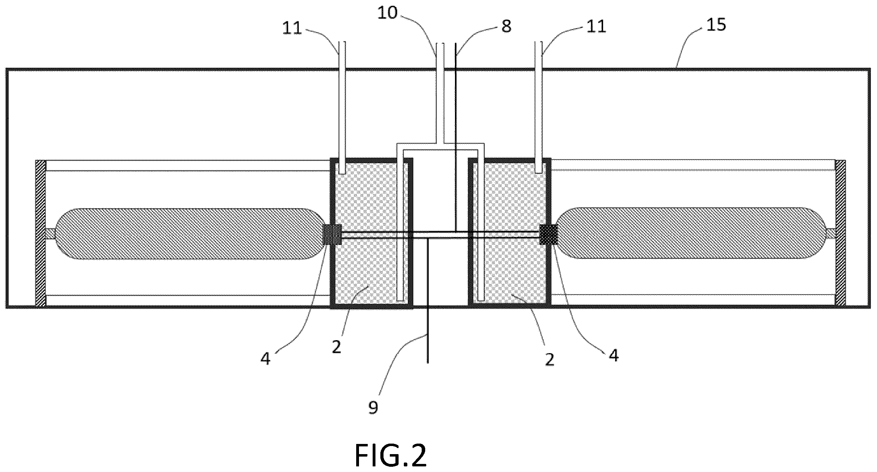

Figure 2 shows an embodiment of the present invention comprising a system including a plurality of Compressed gas storage device CGSD. The high-pressure gas-lines 8 and cylinder vent lines 9 of each of the Compressed gas storage device CGSD are coupled.

The ventilation inlets 10 of the each of the Compressed gas storage device CGSD are interconnected and guided from the external environment.

The ventilation outlets 11 of the each of the Compressed gas storage device CGSD are separately connected and vented to a safe vent location.

Figure 3 shows a Compressed gas storage device CGSD according to embodiments of the present invention further comprises the second enclosure 15 that in turn comprises a sloped ceiling 16 that is configured to guide leaked hydrogen gas towards an external outlet of the second enclosure.

Due to the fact that the Compressed gas storage device CGSD comprises the second enclosure 15 comprising a sloped ceiling that is configured to guide leaked hydrogen gas towards an external outlet of the second enclosure the risks of a hazardous situation are further reduced. Preferably and as shown in figure 3, the sloped ceiling is located above at least one cylinder.

In this manner leaked compressed gas is guided by means of the sloped ceiling 16 in direction of external outlets by natural buoyancy forces without requiring additional ventilation means for forcing the leaked compressed gas towards the external outlet.

Hence less energy is required for obtaining a situation with a diminished risk for hazardous situations.

Although various embodiments which incorporate the teachings of the present invention have been shown and described in detail herein, those skilled in the art can readily devise many other varied embodiments that still incorporate these teachings.

A final remark is that embodiments of the present invention are described above in terms of functional blocks. From the functional description of these blocks, given above, it will be apparent for a person skilled in the art of designing electronic devices how embodiments of these blocks can be manufactured with well-known components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims

## Claims

1. Compressed gas storage device (CGSD) comprising at least one cylinder (1) configured to store compressed gas and a structural support frame (3) configured to position the at least one cylinder, the compressed gas storage device (CGSD) comprising:
a high-pressure gas-line (8) configured to couple the at least one cylinder to a gas consumer device exterior of the compressed gas storage device (CGSD); and
each cylinder of the at least one cylinder comprising a valve (4) configured to couple the cylinder to the high pressure gas-line (8), **CHARACTERISED IN THAT** the Compressed gas storage device comprises:
a first enclosure (2), configured to enclose the valve (4), configured to couple the cylinder to the high pressure gas-line (8), gas-tightly from an environment of the compressed gas storage device (CGSD), the first enclosure (2) further comprises a ventilation inlet (10) and ventilation outlet (11) for evacuating leaked compressed gas.

2. Compressed gas storage device (CGSD) according to claim 1, **CHARACTERISED IN THAT** the compressed gas storage device comprises a second enclosure (15) comprising a sloped ceiling (16) configured to guide leaked hydrogen gas from the CGSD towards an external outlet of the second enclosure (15).

3. Compressed gas storage device (CGSD) according to claim 1 or 2, **CHARACTERISED IN THAT** the ventilation inlet (10) and ventilation outlet (11) are lockable and **in that** the first enclosure (2) comprises an inert gas.

4. Compressed gas storage device (CGSD) according to any of the previous claims, **CHARACTERISED IN THAT** the valve (4) of the Compressed gas storage device comprises a thermal safety device (5) configured to discharge the compressed gas from the at least one cylinder to the external environment if a temperature near the thermal safety device exceeds a certain threshold value.

5. Compressed gas storage device (CGSD) according to any of previous claims, **CHARACTERISED IN THAT** the Compressed gas storage device (CGSD) comprises an external thermal trigger device (14) located within structural support frame (3), configured to trigger discharge of the compressed gas from the at least one cylinder to the external environment if a temperature near the external trigger safety device (14) exceeds a certain threshold value.

6. Compressed gas storage device (CGSD) according to any of previous claims, **CHARACTERISED IN THAT the** valve (4) is configured to control a flow of gas in and out of the at least one cylinder.

7. Compressed gas storage device (CGSD) according to any of previous claims, **CHARACTERISED IN THAT** the compressed gas storage device further comprises a gas detector (12) configured to detect presence of the leaked compressed gas in the first enclosure (2).

8. Compressed gas storage device (CGSD) according to any of previous claims, **CHARACTERISED IN THAT** the compressed gas storage device further comprises control means configured to close the valve in the first enclosure at detection of gas in the first enclosure (2).

9. Compressed gas storage device (CGSD) according to any previous claim at least in combination with claim 2, **CHARACTERISED IN THAT** the second enclosure comprises a manifold comprising an outer tube coupled to a ventilation inlet or ventilation outlet, the outer tube comprising an inner tube, the inner being coupled to the high pressure gas-line.

10. A first enclosure (2), for use in a Compressed gas storage device (CGSD) comprising at least one cylinder (1) configured to store compressed gas and a structural support frame (3) configured to position the at least one cylinder, the first enclosure of the compressed gas storage device (CGSD) comprising a high-pressure gas-line (8) configured to couple the at least one cylinder to a gas consumer device external of the enclosure; and each cylinder of the at least one cylinder comprising a valve (4) configured to couple the cylinder to the high pressure gas-line, **CHARACTERISED IN THAT** the first enclosure (2) is configured to enclose the valve (4), configured to couple the cylinder (1) to the high pressure gas-line (8), gas-tightly from an environment of the Compressed gas storage device (CGSD), the first enclosure (2) further comprising a ventilation inlet (10) and ventilation outlet (11) for evacuating leaked compressed gas.

11. Compressed gas storage System for providing compressed gas stored to a compressed gas consumer of the system, **CHARACTERISED IN THAT** the compressed gas storage System comprises, a plurality of the compressed gas storage devices according to any of claims 1 to 9.

12. Compressed gas storage System according to claim 11, **CHARACTERISED IN THAT** the plurality of compressed gas storage devices is divided in a first and a second group of compressed gas storage devices, the first group of compressed gas storage devices and the second group of compressed gas storage devices being located spatially separately.

13. System according to claim 11 or 12, **CHARACTERISED IN THAT** the compressed gas consumer device is one of a combined hydrogen/diesel engine, a hydrogen engine, a fuel cell or other gaseous fuel consuming device.

14. Method for storing compressed gas in a compressed gas storage device (CGSD) comprising at least one cylinder (1) for storing the compressed gas and a structural support frame (3) configured to position the at least one cylinder, the compressed gas storage device comprising:
a high-pressure gas-line (8) configured to couple the at least one cylinder to a gas consumer device exterior of the compressed gas storage device (CGSD), the method comprising the steps of:
coupling, by a valve (4), each cylinder of the at least one cylinder to the high pressure gas-line (8), **CHARACTERISED IN THAT** the method further comprises the step of:
enclosing, by a first enclosure (2), the valve (4) configured to couple the cylinder to the high pressure gas-line (8), gas-tightly from the environment of the compressed gas storage device, and
ventilating, by means of a ventilation inlet (10) and ventilation outlet (11), the first enclosure (2) for evacuating leaked compressed gas.
